# EUROPEAN PATENT APPLICATION

(11) **EP 2 341 658 A1**
(43) Date of publication of application: **06.07.2011**
(21) Application number: 09306359.2
(22) Date of filing: 31.12.2009
(51) Int. Cl.: H04L 9/32, G06K 19/073

(54) **Asymmetric cryptography error counter**

(71) Applicant: Gemalto SA, 92190 Meudon (FR)
(72) Inventor: Joffray, Olivier, 92190, Meudon (FR)

(57) **Abstract**

The invention relates to an electronic device storing an object. The electronic device is set to protect access to the object with a public key by requesting a proof of possession of the corresponding private key. It is also set to associate a counter with the object, to update the counter for each failed proof of possession, and to trigger a security countermeasure if the number of failed proofs of possession exceeds a predefined threshold.

The invention also relates to a method for protecting access to an object stored in an electronic device.

## Description

The invention relates to an electronic device and to a method for protecting access to an object stored in an electronic device.

The invention relates in particular to a security token, which is a type of electronic device. A security token is typically is light and small in order to be easily carried by a user (it fits easily in a pocket). It is most often personal. In general, a security token is a resource constrained device, in that at least one of the following is true: its processor is not very powerful, it has little memory, it does not have a source of power (battery etc.) nor a user interface, i.e. in order to interact with the security token a user typically needs to connect the security token (either in contact or in contact-less mode) with a terminal, which provides some power as well as means to input data into the security token and/or to display or otherwise communicate to the user (e.g. with a sound card, an LED, a buzzer, a vibrator, etc.) certain information sent by the security token. More elaborate security tokens may embed a battery, and/or have input/output capabilities such as a small pinpad, or a small LCD.

The most widespread example of security token is probably the smart card. Billions of smart cards are used in the world, and allow card holders (people carrying the smart card) to authenticate themselves e.g. to a financial institution (e.g. when making payment with a bank card), to a telecom operator (e.g. when passing phone calls with a GSM phone equipped with a SIM card), or to a government organization (e.g. when authenticating with a healthcare smart card, ID smart card, or electronic passport). Many other types of security tokens exist, for example USB keys, parallel port dongles, OTP tokens (OTP stands for One Time Password), TPMs (trusted platform modules, specified by the Trusted Computing Group, and which typically allow to secure a computing device by verifying in particular that the hardware components are not modified, and that any software it runs has the good version and has been properly signed), etc.

Security tokens typically comprise security features allowing them to protect access to their features based on access conditions. For example an entity willing to read certain private data from such security token may be denied access if it does not prove its knowledge of a PIN code or of a cryptographic key, while the same entity would be authorized to read public data or to call all sorts of innocuous commands. Access conditions can be viewed as rules. Access conditions are typically stored inside the security token, and verified by the security token itself (which is typically equipped with a processor or with dedicated circuitry able to carry out this task). An access condition is typically linked to a specific element in the security token (for example a file, or a part of a file, or a software application installed on the security token, or a subset of the functions offered by such software application). An access condition is also typically linked to a given action (the action being associated with the element to which the access condition is linked). There may be plenty of possible actions for each element. For example, a file can be read, initialized, deleted (the file no longer exists), updated, erased (the file exists but is empty, or contains only zeros), etc. A software application can be executed, customized, uninstalled, deactivated, etc. Therefore there can be one access condition for reading file number 1, another access condition for deleting file number 1, and yet another condition for reading the third segment of file number 2. An access condition is said to be met when the rule specified in the access condition is verified, which allows the execution of the action (specified in the access condition) on the element (specified in the access condition). An access condition typically contains an identifier of an authentication method which has to be carried out successfully in order for the access condition to be met, and an identifier of the credential to be used. Examples of identifiers which may be found in ISO 7816-4 compliant smart cards comprise
- CHV2, which means that in order to meet the access condition, a PIN code called CHV2 should be verified. There may typically be several PIN codes in a security token, hence the reference (here CHV2, as opposed to CHV1). A PIN based authentication method is typically a mere comparison of a PIN code provided by the entity willing to meet the access condition with the PIN code stored in the portable token, and therefore in this example the identifier of the PIN code is also the identifier of the authentication method (which is implicit), although it would be possible to have a more elaborate authentication method identifier to offer the possibility of having several authentication algorithms based on the same credential,
- NEV (never), which means that it is not possible to meet the access condition and that any attempt to execute the specified action on the specified element will be denied,
- ALW (always), which means that the access condition is always met and that any attempt to execute the specified action on the specified element will be accepted without restriction,
- AES4, which means that the credential consisting of AES key number 4 should be used for the authentication. In this example, the authentication method is implicitly a challenge response authentication based on AES key number 4. A mere key comparison (as is done with PINs) would be clearly insecure since it would require communicating the key outside the portable token, and the outside world is typically considered insecure.

On ISO 7816 compliant security tokens, access conditions defining the level of protection of commands giving access to sensitive data or/and services, including cryptographic services such as digital signature, is mainly performed via ISO/IEC 7816-4 security architecture (see for example clause 5.4). Security attributes are attached for example to data (data comprise files and logical data structures), or to cryptographic objects (including objects nested in files or in logical data structures), and typically comprise access mode bytes and related security conditions. Such security attributes are generally nested in an FCP template (File Control Parameter, see for example clause 5.3.3).

As seen above, security tokens typically store symmetric cryptographic keys (such as DES, 3DES or AES keys) and PIN codes. Symmetric cryptographic keys are typically shared between the smart card and an external entity, while PIN codes are typically shared between the smart card and the holder of the smart card, who needs to remember the PIN code by heart.

A PIN code is typically a four digit decimal number, and there are therefore only 10000 possible values. PIN codes can be longer, or comprise characters other than decimal digits, but in all cases they need to be short enough to be easily memorized by an average human being, which implies that there are not so many possible combinations (a computer could try all possible combinations in a matter of seconds, or at most minutes). In order to protect PIN codes, security tokens typically comprise a counter, which is associated with the PIN code, and which is typically used to block the PIN code after a small number of wrong attempts (e.g. three wrong attempts). This makes it impossible for a person stealing the security token to carry out an exhaustive search of the PIN code and then to use the security token in place of the user.

Symmetric cryptographic keys are much longer than PIN codes (an exhaustive search would be much longer, and even impossible for state of the art algorithms such as AES or 3DES), and most often are used via a challenge-response mechanism according to which a challenge is sent by the security token to the external party, which encrypts the challenge with the symmetric key, and returns the encrypted challenge to the security token for verification and proof of possession of the symmetric key. The security token re-computes the encrypted challenge from the initial challenge it sent (or decrypts the encrypted challenge received from the external party), and if the comparison is successful, the external party is authenticated. Many attacks (e.g. DPA attacks) have been devised in order to spy the behavior of security tokens as they carry out cryptographic computations, and which, when successful, can lead to the recovery of the symmetric key after having recorded and analyzed typically a thousand or more authentication attempts. Many cryptographic countermeasures have been devised too. One of the very simple and very efficient countermeasures consists in associating a counter with the symmetric key, and in blocking the key after a number of wrong authentication attempts by an external party (e.g. ten wrong attempts). This countermeasure is typically not the only one. Indeed certain attacks such as DFA attacks may manage to change the counter value. There are also countermeasures against DFA attacks, but any countermeasure can in theory be circumvented, so in general lots of countermeasures are implemented in order to prevent any attack or any combination of attacks to be successful. The counter based countermeasure is very efficient (when there are also protections against DFA) because most attacks spying the behavior of the security token require recording a high number of samples, which is impossible if the security token refuses to work after ten failed authentication attempts.

In summary, it is well known to have security tokens protecting PIN codes or symmetric keys with a counter.

Security tokens may also implement access conditions based on asymmetric cryptography, typically with RSA, but sometimes also with other asymmetric algorithms such as DSA or elliptic curves. In this case, an object may be protected by a public key. The public key may be stored in the security token, or sent to it when authentication is requested. When the public key is not pre-stored, a mechanism typically has to be put in place in order to guarantee that the public key and private key pair is a legitimate one. This can be based for example on a PKI (public key infrastructure), or on other schemes such as OpenPGP schemes.

Many asymmetric schemes rely on the use of certificates. A certificate is a data structure which uses a digital signature to bind together a public key with an identity (information such as the name of a person or an organization, their address, and so forth). The certificate can be used to verify that a public key belongs to an individual. In a typical PKI scheme, the signature of the certificate is carried out by a certification authority (a.k.a CA). In a web of trust scheme (used in particular in PGP), there are typically several signatures in the certificate, including typically the signature of the user himself (this is then a self-signed certificate) and of other users (which endorse the user). In either case, the signatures on a certificate are attestations by the certificate signer that the identity information corresponds to the public key. There are different certificate formats, as specified for example in X.509 standard, or as specified by PGP. X.509 is one of the most widespread solutions, and is typically very appropriate for security tokens, which are often managed centrally, for example by a mobile phone operator (e.g. SIM cards), by a financial institution (e.g. bank cards), or by a government (e-passports, healthcare smartcards, e-ID cards, etc.). Usually, a PKI with a CA is then a good solution, and X.509 is the most commonly used standard in this context.

Certificates can be more elaborate then explained above. For example, certificates can be used to define the rights of a certificate holder for access control purposes. Such rights may include privileges, which may encompass actions (e.g. read action, write action, create action, delete action, erase action, execute action, etc.), as well as timing considerations (rights granted only from Monday to Friday, from 8AM to 6PM), delegations (rights granted when the boss is absent), or the type of objects that can or cannot be accessed (e.g. applets, key files, configuration files, administrative files...), etc.

Examples of what can be done with certificates in terms of privilege management are given below on the basis of version 08/2005 of ITU-T X.509 standard, referred to as the X.509 standard. However, other possibilities exist, either through proprietary implementations, or through the use of alternate standards.

As explained in page 62, section 3, second paragraph, of the X.509 standard, the binding of a privilege to an entity can be provided by an authority through a digitally signed data structure called an attribute certificate or through a public-key certificate containing an extension defined explicitly for this purpose.

Page 4, clause 3.3.1 defines an attribute certificate as a data structure, digitally signed by an Attribute Authority, that binds some attribute values with identification information about its holder, while clause 3.3.2 defines Attribute Authority as an authority which assigns privileges by issuing attribute certificates. Page 5, clause 3.3.42 defines a privilege management infrastructure (PMI) as an infrastructure able to support the management of privileges in support of a comprehensive authorization service and in relationship with a Public Key Infrastructure. Page 12, clause 7, defines extensions with the following ASN.1 structure:

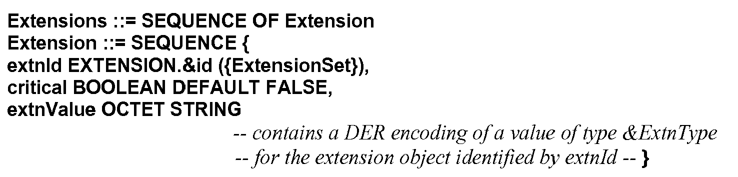

In the context of the X.509 standard, the extensions field allows addition of new fields to the structure without modification to the ASN.1 definition. An extension field consists of an extension identifier, a criticality flag, and an encoding of a data value of an ASN.1 type associated with the identified extension. For those extensions where ordering of individual extensions within the SEQUENCE is significant, the specification of those individual extensions shall include the rules for the significance of the order therein. When an implementation processing a certificate does not recognize an extension, if the criticality flag is FALSE, it may ignore that extension. If the criticality flag is TRUE, unrecognized extensions shall cause the structure to be considered invalid, i.e., in a certificate, an unrecognized critical extension would cause validation of a signature using that certificate to fail. When a certificate-using implementation recognizes and is able to process an extension, then the certificate-using implementation shall process the extension regardless of the value of the criticality flag. An extension that is flagged non-critical will cause inconsistent behavior between certificate-using systems that will process the extension and certificate-using systems that do not recognize the extension and will ignore it. If unknown elements appear within the extension, and the extension is not marked critical, those unknown elements shall be ignored according to the rules of extensibility documented in 12.2.2 in ITU-T Rec. X.519 | ISO/IEC 9594-5.

A CA has three options with respect to an extension:
i) it can exclude the extension from the certificate;
ii) it can include the extension and flag it non-critical;
iii) it can include the extension and flag it critical.

A validation engine has two possible actions to take with respect to an extension:
i) it can ignore the extension and accept the certificate (all other things being equal);
ii) it can process the extension and accept or reject the certificate depending on the content of the extension and the conditions under which processing is occurring (e.g. the current values of the path processing variables).

Specific extensions may be defined in ITU-T Recommendations | International Standards or by any organization which has a need. The object identifier which identifies an extension shall be defined in accordance with ITU-T Rec. X.660 | ISO/IEC 9834-1. Standard extensions for certificates are defined in clause 8 of this Directory Specification.

As explained on page 63, clause 12, of the X.509 standard, public-key certificates are principally intended to provide an identity service upon which other security services, such as data integrity, entity authentication, confidentiality and authorization, may be built. There are two distinct mechanisms provided in the X.509 standard for binding a privilege attribute to a holder:
- Public-key certificates, used in combination with the entity authentication service, can provide an authorization service directly, if privileges are associated with the subject through the practices of the issuing CA. Public-key certificates may contain a subjectDirectoryAttributes extension that contains privileges associated with the subject of the public-key certificate. This mechanism is appropriate in situations where the authority issuing the public-key certificate (CA) is also the authority for delegating the privilege (AA) and the validity period of the privilege corresponds to the validity period of the public-key certificate. End-entities cannot act as AAs.
- In the more general case, entity privileges will have lifetimes that do not match the validity period for a public-key certificate. Privileges will often have a much shorter lifetime. The authority for assignment of privilege will frequently be other than the authority issuing that same entity a public-key certificate and different privileges may be assigned by different Attribute Authorities (AA). Privileges may also be assigned based on a temporal context and the 'turn on/turn off aspect of privileges may well be asynchronous with the lifetime of the public-key certificate and/or asynchronous with entity privileges issued from a different AA. The use of attribute certificates issued by an AA provides a flexible Privilege Management Infrastructure (PMI) which can be established and managed independently from a PKI. At the same time, there is a relationship between the two whereby the PKI is used to authenticate identities of issuers and holders in attribute certificates.

A explained in clause 12.1, An attribute certificate is a separate structure from a subject's public key certificate. A subject may have multiple attribute certificates associated with each of its public key certificates. There is no requirement that the same authority create both the public key certificate and attribute certificate(s) for a user; in fact separation of duties will frequently dictate otherwise. In environments where different authorities have responsibility for issuing public key and attribute certificates, the public key certificate(s) issued by a Certification Authority (CA) and the attribute certificate(s) issued by an Attribute Authority (AA) would be signed using different private signing keys. In environments where a single entity is both the CA, issuing public key certificates, and the AA, issuing attribute certificates, it is strongly recommended that a different key be used to sign attribute certificates than the key used to sign public-key certificates.

As explained in clause 13, page 65, The Attribute Authority (AA) and Certification Authority (CA) are logically (and, in many cases, physically) completely independent. The creation and maintenance of "identity" can (and often should) be separated from the PMI. Thus the entire PKI, including CAs, may be existing and operational prior to the establishment of the PMI. The CA, although it is the source of authority for identity within its domain, is not automatically the source of authority for privilege. The CA, therefore, will not necessarily itself be an AA and, by logical implication, will not necessarily be responsible for the decision as to what other entities will be able to function as AAs (e.g., by including such a designation in their identity certificates).

The Source of Authority (SOA) is the entity that is trusted by a privilege verifier as the entity with ultimate responsibility for assignment of a set of privileges. A resource may limit the SOA authority by trusting certain SOAs for specific functions (e.g., one for read privileges and a different one for write privileges). An SOA is itself an AA as it issues certificates to other entities in which privileges are assigned to those entities. An SOA is analogous to a 'root CA' or 'trust anchor' in the PKI, in that a privilege verifier trusts certificates signed by the SOA. In some environments there is a need for CAs to have tight control over the entities that can act as SOAs. This framework provides a mechanism for supporting that requirement. In other environments, that control is not needed.

This framework is flexible and can satisfy the requirements of many types of environments.
a) In many environments, all privileges will be assigned directly to individual entities by a single AA, namely the SOA.
b) Other environments may require support for the optional roles feature, whereby individuals are issued certificates that assign various roles to them. The privileges associated with the role are implicitly assigned to such individuals. The role privileges may themselves be assigned in an attribute certificate issued to the role itself or through some other means (e.g., locally configured).
c) Another optional feature of this framework is the support of privilege delegation. If delegation is done, the SOA assigns privilege to an entity that is permitted to also act as an AA and further delegate the privilege. Delegation may continue through several intermediary AAs until it is ultimately assigned to an end-entity that cannot further delegate that privilege. The intermediary AAs may or may not also be able to act as privilege asserters for the privileges they delegate.
d) In some environments, the same physical entity may be acting as both an AA and a CA. This dual logical role for the same physical entity is always the case when privilege is conveyed within subjectDirectoryAttributes extension of a public-key certificate. In other environments, separate physical entities act as CAs and AAs. In the latter case, privilege is assigned using attribute certificates instead of public-key certificates.

When attribute certificates point to public-key certificates for their issuers and holders, the PKI is used to authenticate holders (privilege asserters) and verify the digital signatures of the issuers.

As explained in clause 13.1, entities may acquire privilege in two ways:
- An AA may unilaterally assign privilege to an entity through the creation of an attribute certificate (perhaps totally on its own initiative, or at the request of some third party). This certificate may be stored in a publicly accessible repository and may subsequently be processed by one or more privilege verifiers to make an authorization decision. All of this may occur without the entity's knowledge or explicit action.
- Alternatively, an entity may request a privilege of some AA. Once created, this certificate may be returned (only) to the requesting entity, which explicitly supplies it when requesting access to some protected resource.

In both procedures the AA needs to perform its due diligence to ensure that the entity should really be assigned this privilege. This may involve some out-of-band mechanisms, analogous to the certification of an identity/key-pair binding by a CA.

The attribute certificate based PMI is suitable in environments where any one of the following is true:
- A different entity is responsible for assigning particular privilege to a holder than for issuing public-key certificates to the same subject;
- There are a number of privilege attributes to be assigned to a holder, from a variety of authorities;
- The lifetime of a privilege differs from that of the holder's public key certificate validity (generally the lifetime of privileges is much shorter); or
- The privilege is valid only during certain intervals of time which are asynchronous with that user's public-key validity or validity of other privileges.

As explained in clause 13.2, in some environments, privileges are associated with the subject through the practices of a CA. Such privilege may be put directly into public-key certificates (thereby re-using much of an already-established infrastructure), rather than issuing attribute certificates. In such cases, the privilege is included in the subjectDirectoryAttributes extension of the public-key certificate.

This mechanism is suitable in environments where one or more of the following are true:
- The same physical entity is acting both as a CA and an AA;
- The lifetime of the privilege is aligned with that of the public-key included in the certificate;
- Delegation of privilege is not permitted; or
- Delegation is permitted, but for any one delegation, all privileges in the certificate (in the subjectDirectoryAttributes extension) have the same delegation parameters and all extensions relevant to delegation apply equally to all privileges in the certificate.

As explained in clause 14.1, page 67, The general privilege management model consists of three entities: the object, the privilege asserter and the privilege verifier.

The object may be a resource being protected, for example in an access control application. The resource being protected is referred to as the object. This type of object has methods which may be invoked (for example, the object may be a firewall which has an "Allow Entry" object method, or the object may be a file in a file system which has Read, Write, and Execute object methods). Another type of object in this model may be an object that was signed in a non-repudiation application.

The privilege asserter is the entity that holds a particular privilege and asserts its privileges for a particular context of use.

The privilege verifier is the entity that makes the determination as to whether or not asserted privileges are sufficient for the given context of use.

The pass/fail determination made by the privilege verifier is dependent upon four things:
- privilege of the privilege asserter;
- privilege policy in place;
- current environment variables, if relevant; and
- sensitivity of the object method, if relevant.

To the best of the applicant knowledge, state of the art security tokens implementing asymmetric cryptography based access conditions do not associate a counter with the public key. This might be due to the fact that the public key is, by definition, public, therefore there is no reason to be afraid that an attacker could recover the public key (unlike PINs or symmetric keys). In general the hacker already has access to the public key (there is no point attacking the security token for that purpose). It would therefore seem useless to use a counter in this context, which might explain why this has never been done. There is another reason, linked to the fact that quite often the security token does not know the public key in advance, and that many different public keys can sometimes be used to access the same object. It would therefore be very inconvenient to manage counters associated with public keys, since a new record should be created each time a new public key that had never been presented earlier is presented to the security token, and a separate counter should then be managed for this new public key. After a certain number of keys has been presented, this would slow down the operations of the security token which would need to go through the history of presented public keys in order to determine whether a newly presented public key had already been presented in the past or not. This would also require a lot of storage space, for example an RSA 2048 public key requires 2048 bits for the modulus, plus at least a few bytes for the public exponent and other information such as the counter, i.e. a total of around 300 bytes, which cannot be compressed. Indeed, many security tokens are resource constrained device, which processors are very slow compared to modern computers, and which often have a non-volatile memory which is limited to a few kilobytes of EEPROM or Flash memory (for example 32Kb or 64Kb for the most widespread smart cards). For example, in order to secure the healthcare system, some countries (such as France) have deployed smart cards. Each patient (in fact almost every citizen, since almost everybody goes to a doctor one day or the other) has a healthcare card (called "carte Vitale" in France). Each doctor has a doctor card (called CPS, for "Carte de Professionnel de Santé" in France). The specifications of those cards constantly evolve in order to take into account new threats, new requirements, or new possibilities offered by new technologies. One growing requirement is the possibility to for one card holder (the doctor or the patient) to access data in the card of the other party (patient or doctor, respectively). One solution, described in particular in EP2077517, consists in delegating part of the enforcement of an access condition from one card to the other card. Another solution would consist in authenticating one card holder to the other party's card by using asymmetric authentication, which does not necessarily require preliminary knowledge of the credentials (unlike symmetric authentication which requires a shared secret to have been put in place beforehand). For example it would be possible for a doctor's card to authenticate a patient based on the patient's public key, and on a proof of possession of the corresponding private key (which may be stored in the patient's card). However, if a doctor receives tens of patients per day, and if all of his patients need access to certain data in his card, after a few days his doctor's card would be filled with keys and counters and would become unusable.

It is an aim of the invention to propose an electronic device implementing asymmetric cryptography based access conditions which is more secure than state of the art electronic devices, and a method to secure electronic devices implementing asymmetric cryptography based access conditions.

An electronic device according to the invention stores an object. For example the object may be a configuration file, a file containing personal data (such as a text document, pictures, music, etc.), a key file (containing cryptographic material which an entity may be willing to update), an administrative file, a software application (such as an applet), a part of a file (such as a particular record in a database file) etc. The electronic device can be in particular a security token (such as, in a preferred embodiments, a smart card), but also any electronic device implementing asymmetric cryptography based access conditions. Indeed, the electronic device according to the invention is set to protect access to the object with a public key by requesting a proof of possession of the corresponding private key. The electronic device may store a list of authorized public keys, or, in order to save memory, a list of hashes (e.g. SHA-1 hashes) or identifiers (e.g. serial numbers) of authorized public keys. It can also rely on other techniques, such as PKI, in order to determine that a public key that is presented is an authorized one, without having pre-stored the public key (or a hash of the public key). The entity willing to access the object does not necessarily have to send the public key to the electronic device. If the electronic device already stored the public key, or if it is able to obtain it from an external party (such as a directory server), the entity can simply send an identifier or hash of the public key, or even not send anything at all if in the particular context there is only one possible public key (which, optionally, might therefore be implicitly selected). In order to establish the proof of possession, the electronic device may for example send a challenge (typically a random number generated by the electronic device) to the entity willing to access the object. The entity is then expected to sign the challenge with the private key and return it to the electronic device, which may verify the signature with the public key and accordingly grant or deny access to the object (optionally subject to additional conditions, such as time and date considerations, as will be seen below). The electronic device according to the invention is further set to associate a counter with the object, to update the counter for each failed proof of possession, and to trigger a security countermeasure if the number of failed proofs of possession exceeds a predefined threshold. The counter may be updated irrespective of the public key that was used, in which case even if two (or more) different public keys are used consecutively, the same counter is decremented twice (or as many times as the number of different public keys), if all authentications failed. The counter may also be associated not only with the object but also with the specific access that is requested, i.e. for two different types of accesses to the same object (e.g. read access and write access), there can be two different counters. This may be done for example by asking the user to specify the type of desired access before proving possession of the private key, or by embedding the public key in a certificate which specifies that only a certain type of access is granted by the associated public key, or similarly by using an attribute certificate (as will be seen later). The threshold preferably corresponds to the maximum number of erroneous attempts conceivably possible with a legitimate entity. There may be errors during authentication, not due to an attack but for example to a wrong input due to a mistake of a human user, or to a network bug introducing errors in a communication. Such errors should be tolerated up to a certain extent (i.e. a certain number of consecutive errors). The threshold shouldn't be too high in order to prevent unnoticed attacks. For example, the electronic device may initialize the counter with a positive integer (for example the value ten), and decrement it for each failed proof of possession, and trigger the security countermeasure if the counter reaches zero. It is preferred to pre-decrement the counter, and to increment it back if the proof of possession is successful. Indeed, an attacker could otherwise try to determine that the proof of possession failed before the counter is decremented (for example via an SPA attack), and manage to circumvent the counter decrementing mechanism. Of course the electronic device preferably comprises countermeasures against SPA, but the pre-decrementing is nonetheless an interesting additional countermeasure. Whenever a successful proof of possession occurs, while the counter didn't reach zero, the counter is preferably re-initialized to its initial value (e.g. ten). It goes without saying that instead of initializing the counter with a positive integer and progressively decrementing it until it reaches zero, it is possible to initialize it with any integer value (positive, negative or zero, for example the value 3), and to add an integer (whether positive or negative, for example the integer -5) whenever the proof of possession fails, until another reference integer value (not necessarily zero, for example the value -47, corresponding to 10 failed attempts) is reached. This is functionally equivalent and there are many trivial equivalents.

According to a preferred embodiment, the security countermeasure comprises recording the fact that the threshold was exceeded. This fact signals a likely security risk event. In a preferred embodiment, this corresponds to a situation in which the counter value is already zero (it has been decremented during previous failed proofs of possession, e.g. after ten attempts) when access is requested. The recording can for example take place in a log file (or any appropriate memory location) located in the electronic device itself. When possible, the entry created in the log file can include the date and time of the event, and the circumstances (e.g. an identifier of the object to which access was last attempted, etc.). In case the electronic device is a smart card, date and time are typically not available in a safe manner from within the smart card (which typically does not comprise a battery and which therefore typically does not have a permanent time reference). In this case, a non-verified date and time can sometimes be obtained from an external entity (e.g. from a cell phone in which the smart card is inserted), or, when a proper architecture is in place, a guaranteed time and date can be provided, e.g. from a secure time server implementing state of the art time-stamping mechanisms. It is also possible to not record time and date at all. The recording of the event can also be done in a remote location, for example an electronic device consisting of a SIM card could send via a 3G network information about the security event to a remote logging server (which could add its own date and time). The log file, whether stored locally in the electronic device or remotely (e.g. in a server) can be checked on a regular basis. Some electronic devices are off-line most of the time. This is the case for example with most bank cards, which are typically connected only when carrying out a transaction, e.g. in an ATM machine for cash withdrawal or in a POS (point of sales terminal) when purchasing goods in a shop. For such electronic devices, the log file can be checked each time a legitimate transaction is carried out with the electronic device. This is advantageous, because this can give an indication (e.g. to a financial institution managing banking cards, or to any entity managing a set of electronic devices, such as a network administrator) that attacks have probably been attempted, how often, and on which targets. This may therefore permit investigations before the attack is successful. It may therefore prevent the attack from ever being successful if the attackers are caught early enough. This can also permit updates in the design of the electronic device or in the system in which the electronic device operates, before it is too late.

According to a preferred embodiment, the electronic device is set to not update the counter anymore when the threshold is exceeded. For example, if the counter is initialized with a value ten, is decremented for each failed proof of possession, and finally reaches 0, it is not subsequently updated with -1, -2 and so on. Instead, the electronic device may (but this is only an option) record the occurrence of any subsequent failed proof of possession, preferably in the same log file.

According to a preferred embodiment, the security countermeasure comprises blocking access to the object. Preferably, once the counter reaches zero (or any value determining that the threshold was reached), it cannot be reset to its initial value merely by a subsequent successful proof of possession. Any attempt of an entity to access the object, wherein the requested access to this object is protected by the counter which reached the threshold, is preferably denied. Resetting the counter is, preferably, only possible via an unblock mechanism (access to the object remaining blocked until then). An unblock mechanism can be put in place in order to reset the counter to its initial value. The unblock mechanism is preferably protected by an authentication with a credential distinct from the one(s) that was(were) expected in the failed proof of possession leading to the counter being blocked.

Blocking access to the object is however not mandatory, since, unlike with a PIN code or a symmetric key, there is no major risk of compromising a cryptographic credential (in general the public key is not a sensitive data, and it is often easily accessible). So in a variant, access to the object is never blocked (meaning that a successful proof of possession is sufficient to reset the counter even if the counter reached zero), however a number of consecutive failed proof of possession attempts higher than a predefined threshold triggers a security countermeasure, and any subsequent failed proof of possession can also trigger a security countermeasure.

According to a preferred embodiment, the electronic device is set to store several objects, and to let the objects be grouped in sets. For example one set may comprise all objects linked to a payment application, another set may comprise all objects linked to an e-purse application, and another set may comprise all objects linked to a contact-less transport fare collection application. The electronic device is set to use, for all objects of a given set, a single counter. This simplifies the counter management, and optimizes memory, as well as CPU resources (i.e. speed). Alternatively, the electronic device may be set to use, for all objects of a given set, a group of counters, wherein the number of counters in the group is independent from the number of objects in the set. For example, there may be a counter for the read access, a counter for the write access, and a counter for the delete access, i.e. three counters, no matter what the number of objects of the set might be (e.g. ten or fifty objects). In this case, it might be advantageous to adapt the maximum number of authorized failed proof of possession for each counter (they could be decreased, if they are split among different types of accesses, in order to not multiply artificially the number of possible attempts). This embodiment is advantageous, in particular because it allows monitoring potential attacks with a better granularity. In a preferred embodiment, entities willing to access an object in the electronic device may be required to first select the set to which the object belongs, and then only to carry out the authentication (proof of possession etc.), which applies to the whole set. It is possible to have only one set in the electronic device, i.e. a single authentication may be sufficient to access all objects of the electronic device.

According to a preferred embodiment, the electronic device is set to refuse access requests to an object by an entity submitting any public key which is not embedded in a certificate (such as an X.509 certificate) issued by a certification authority recognized by the electronic device. In other words, the electronic device refuses any such public key. As seen earlier, the certificate may be pre-stored in the electronic device or sent to the electronic device by an external server or by the entity (preferred option especially in case many public keys are potentially usable). The electronic device is further set to use a different counter for each certification authority. A certification authority may be recognized by the electronic device for example by prestoring the certification authority public key (or full certificate) in the electronic device, or by storing the public key (or self-signed certificate) of a root CA which certified the public key of the certification authority. The electronic device may then check the signature of the certificate associated with the entity's requested public key only with certification authorities' public keys it recognizes, either because it already stores them, or because they are themselves certified by a root CA which it trusts. If the entity public key is not certified by any of the recognized certification authorities, the electronic device may refuse to go any further, and optionally it could also decrement a dedicated counter (since none of the certification authority specific counters would have a reason to be decremented). This embodiment allows easier monitoring of attacks which are based on credentials of entities which identity is certified by a given certification authority.

According to a preferred embodiment, the electronic device is set to refuse any public key which is not embedded in a certificate (such as an X.509 certificate) comprising an extension which defines a privilege of the certificate holder, and to use a different counter for each privilege. As seen earlier, the certificate may be pre-stored in the electronic device or sent to the electronic device. This embodiment allows easier categorizing of monitored attacks by types of privileges. Some extensions may also be used for example to indicate to which category of persons the certificate holder belongs. For example, a user may be a normal user, or an administrator, or an issuer of the electronic device, etc. This embodiment makes it possible to classify attacks by category of persons or entities impersonated by the attacker, i.e. it is possible to check whether attackers rather present themselves as administrators, or normal users, etc.

In a variant of the previous embodiment, the electronic device is set to refuse any public key which is not embedded in a certificate (such as an X.509 certificate) and which is not associated with an attribute certificate which defines a privilege of the certificate holder, and to use a different counter for each privilege. As seen earlier, the certificate may be pre-stored in the electronic device or sent to the electronic device, and the same is true for the attribute certificate. The entity should specify which attribute certificate it intends to rely on in case many attribute certificates are associated with the certificate. This embodiment also permits the same type of categorization as in the previous embodiment, when the system in which the electronic device makes use of attribute certificates.

The invention also relates to a method for protecting access to an object stored in an electronic device with a public key by requesting a proof of possession of the corresponding private key. The method comprises associating a counter with the object, wherein each failed proof of possession updates the counter, and wherein a security countermeasure is triggered if the number of failed proofs of possession exceeds a predefined threshold.

The preferred embodiments described above in relation to the electronic device also apply to the method, and vice versa.

## Claims

1. An electronic device storing an object, wherein the electronic device is set to protect access to the object with a public key, by requesting a proof of possession of the corresponding private key, **characterized in that** it is set
• to associate a counter with the object,
• to update the counter for each failed proof of possession, and
• to trigger a security countermeasure if the number of failed proofs of possession exceeds a predefined threshold.

2. The electronic device according to claim 1, wherein the security countermeasure comprises recording the fact that the threshold has been exceeded.

3. The electronic device according to claim 2, which is set to not update the counter anymore when the threshold is exceeded, but to record the occurrence of any subsequent failed proof of possession.

4. The electronic device according to claim 1 or 2, wherein the security countermeasure comprises blocking access to the object.

5. The electronic device according to any previous claim, which is set to store several objects and to let the objects be grouped in sets, and which is set to use for all objects of a given set
• a single counter, or
• a group of counters, wherein the number of counters in the group is independent from the number of objects in the set

6. The electronic device according to any previous claims, wherein the electronic device is set
• to refuse any public key which is not embedded in a certificate issued by a certification authority recognized by the electronic device, and
• to use a different counter for each recognized certification authority.

7. The electronic device according to any previous claims, wherein the electronic device is set
• to refuse any public key which is not embedded in a certificate comprising an extension which defines a privilege of the certificate holder, and
• to use a different counter for each privilege.

8. The electronic device according to any of claims 1 to 6, wherein the electronic device is set
• to refuse any public key which is not embedded in a certificate and which is not associated with an attribute certificate which defines a privilege of the certificate holder, and
• to use a different counter for each privilege.

9. A method for protecting access to an object stored in an electronic device with a public key, by requesting a proof of possession of the corresponding private key, **characterized in that** it comprises associating a counter with the object, wherein
• each failed proof of possession updates the counter, and
• a security countermeasure is triggered if the number of failed proofs of possession exceeds a predefined threshold.

10. The method according to claim 9, wherein the security countermeasure comprises recording the fact that the threshold has been exceeded.

11. The method according to claim 9 or 10, wherein the security countermeasure comprises blocking access to the object.

12. The method according to any of claims 9 to 11, wherein the electronic device stores several objects, wherein the objects are grouped in sets, wherein
• a single counter, or
• a group of counters, wherein the number of counters in the group is independent from the number of objects in the set is used for all objects of a given set.

13. The method according to any of claims 9 to 12, which refuses any public key which is not embedded in a certificate issued by a certification authority recognized by the electronic device, wherein the method uses a different counter for each recognized certification authority.

14. The method according to any of claims 9 to 13, which refuses any public key which is not embedded in a certificate comprising an extension which defines a privilege of the certificate holder, wherein the method uses a different counter for each privilege.

15. The method according to any of claims 9 to 13, which refuses any public key which is not embedded in a certificate and which is not associated with an attribute certificate which defines a privilege of the certificate holder, wherein the method uses a different counter for each privilege.
